# FASCICULE DE BREVET EUROPEEN

(11) **EP 2 352 667 B1**
(45) Date de publication et mention de la délivrance du brevet: **23.09.2015**
(21) Numéro de dépôt: 09764546.9
(22) Date de dépôt: 06.11.2009
(51) Int. Cl.: B62M 23/02

(54) **PROCEDE DE GESTION DE L'EFFORT D'UN UTILISATEUR D'UN VEHICULE A PROPULSION HUMAINE ET VEHICULE ADAPTE A CE PROCEDE**
VERFAHREN ZUR VERWALTUNG DER ANSTRENGUNG EINES BENUTZERS EINES DURCH KRAFT EINES MENSCHEN ANGETRIEBENEN FAHRZEUGS UND FÜR DAS VERFAHREN AUSGELEGTES FAHRZEUG
METHOD FOR MANAGING THE STRAIN OF A USER OF A HUMAN PROPULSION VEHICLE, AND VEHICLE ADAPTED FOR SAID METHOD

(30) Priorité: 07.11.2008 FR 0806256
(43) Date de publication de la demande: 10.08.2011
(73) Titulaire: IMW Productions Belgium, 1440 Wauthier-Braine (BE)
(72) Inventeur: Garin Bruno, 44240 La Chapelle/erdre (FR); Jean Eric, 14112 Bieville-beuville (FR)
(74) Mandataire: Lavialle, Bruno François Stéphane
(86) Numéro de dépôt international: PCT/FR2009/001289
(87) Numéro de publication internationale: WO 2010/052395

(56) Documents cités:
- EP-A- 1 295 785

## Description

La présente invention concerne un procédé de gestion de l'effort d'un utilisateur d'un véhicule à propulsion humaine et un véhicule adapté à la mise en oeuvre de ce procédé.

### ARRIERE PLAN DE L'INVENTION

Il est maintenant entré dans les moeurs qu'un exercice physique régulier permet de maintenir le corps en bonne santé, de limiter le risque de défaillances cardiovasculaires ou articulaires, et/ou de récupérer un fonctionnement normal du corps après une défaillance de celui-ci. Ceci a entraîné un engouement sans précèdent pour les activités physiques et/ou sportives telles que la gymnastique d'entretien ou fitness, la course à pied, l'entraînement cardiaque ou cardio-training, la musculation... aboutissant, si ce n'est à un culte du corps, tout au moins à une prise de conscience de la nécessité de son entretien pour lui permettre de durer sans défaillance.

C'est dans ces conditions que se sont développées des salles spécialisées proposant à leurs clients l'usage de nombreux appareils permettant l'exercice global du corps ou l'exercice ciblé de certaines parties de celui-ci. Ces appareils reposent tous sensiblement sur le même principe, à savoir de contraindre l'utilisateur à exercer un effort contrôlé au moyen d'un dispositif de résistance à l'effort de l'utilisateur. La vente de ces appareils aux particuliers s'est également développée mais on s'est aperçu que les séances d'utilisation dudit appareil avaient lieu à un rythme rapproché peu après l'achat de l'appareil et s'espaçaient progressivement jusqu'à l'inutilisation après quelques mois. Ceci a permis aux salles de gymnastique et/ou de musculation d'attirer des clients en mettant en avant un service d'entraînement adapté ou coaching, incitant et motivant les adhérents desdites salles à une pratique régulière.

Il est en outre connu dans le domaine médical, par exemple pour la rééducation médicale ou la détermination d'aptitudes physiques de personnes, de faire réaliser à des patients des exercices physiques selon des programmes déterminés par un médecin. Ces exercices sont réalisés sur des appareils situés dans une salle dédiée à cet effet et surveillés par un membre du personnel médical ; et les utilisateurs des appareils sont équipés de capteurs de paramètres physiologiques comme la fréquence cardiaque ou la capacité pulmonaire.

L'exercice physique réalisé en salle, s'il est intéressant parce qu'il permet une certaine assiduité des utilisateurs et une surveillance de ceux-ci, présente l'inconvénient d'être justement réalisé en salle, imposant à l'utilisateur de se plier à des horaires d'ouverture et de devoir se dépenser physiquement dans un espace clos présentant généralement une aération insuffisante et une hygiène aléatoire.

Le document EP1295785 décrit un véhicule selon le préambule de la revendication 16 et aussi les caractéristiques suivantes de la revendication 1 :
un procédé de gestion d'un effort physique d'un utilisateur d'un véhicule à propulsion humaine comportant une unité de commande (36) reliée à un moteur électrique (30) alimenté par une batterie (28) et agencé pour se substituer au moins en partie à l'utilisateur pour la propulsion du véhicule en fonction d'un programme exécuté par l'unité de commande (36) pour gérer l'effort physique de l'utilisateur, l'unité de commande étant reliée à un dispositif de géolocalisation et de navigation (56), le procédé comprenant les étapes de :
   - déterminer, d'une part, des valeurs cibles concernant au moins un paramètre physiologique (54) et l'effort fourni par l'utilisateur et, d'autre part, un itinéraire vers un point d'arrivée prédéterminé,
   - acquérir des informations utilisées par le programme de commande (36), à savoir au moins une localisation géographique du véhicule, le paramètre physiologique de l'utilisateur, un état de charge de la batterie, un effort fourni par le moteur, l'effort fourni par l'utilisateur,
   - commander le moteur en fonction des informations et des valeurs cibles

### OBJET DE L'INVENTION

Par l'invention, on entend proposer un moyen d'exercice physique d'un utilisateur permettant audit utilisateur de s'affranchir des contraintes ci-dessus énoncées, tout en lui assurant une certaine sécurité quant à l'incidence sur sa santé des efforts physiques qu'il réalise et en lui procurant une motivation pour la réalisation de ces exercices physiques.

### RESUME DE L'INVENTION

Comme on l'a dit ci-dessus, les autorités sanitaires et médicales incitent la population à se dépenser physiquement et à faire des exercices de manière à pallier une excessive sédentarité des activités humaines.

En outre, des problèmes de pollution atmosphérique et de diminution des ressources naturelles assurant la fourniture d'énergie conduisent une part croissante de la population à se déplacer, pour les petits trajets, à pied ou en utilisant un véhicule à propulsion humaine comme la trottinette, les patins à roulettes ou la bicyclette.

Par l'invention, on entend gérer l'effort d'un utilisateur d'un tel véhicule pour lui assurer un exercice physique adapté pour contribuer au maintien de son corps en bonne santé.

A cet effet, on prévoit, selon l'invention, un procédé de gestion d'un effort physique d'un utilisateur d'un véhicule à propulsion humaine comportant une unité de commande reliée à un moteur électrique alimenté par une batterie et agencé pour se substituer au moins en partie à l'utilisateur pour la propulsion et le freinage du véhicule en fonction d'un programme exécuté par l'unité de commande pour gérer l'effort physique de l'utilisateur, l'unité de commande étant reliée à un dispositif de géolocalisation et de navigation, le procédé comprenant les étapes de :
- déterminer, d'une part, des valeurs cibles concernant au moins un paramètre physiologique et l'effort fourni par l'utilisateur et, d'autre part, un itinéraire vers un point d'arrivée prédéterminé,
- acquérir des informations utilisées par le programme de commande, à savoir au moins une localisation géographique du véhicule, le paramètre physiologique de l'utilisateur, un état de charge de la batterie, un effort fourni par le moteur, l'effort fourni par l'utilisateur.

Le procédé de l'invention permet ainsi de faire du véhicule à propulsion humaine un appareil d'exercice contrôlé qui peut être adapté à l'utilisateur mais également à l'environnement de celui-ci. Le moteur fournit ainsi une assistance variable et, sur au moins une partie de l'itinéraire le moteur s'oppose à l'effort fourni par l'utilisateur pour attendre les valeurs cibles. Le procédé de l'invention peut ainsi être utilisé pour forcer l'utilisateur à faire des efforts concentriques et/ou excentriques.

L'invention a également pour objet un véhicule à propulsion humaine selon revendication 16, comportant une unité de commande reliée à un moteur électrique alimenté par une batterie et agencé pour se substituer au moins en partie à un utilisateur pour la propulsion et le freinage du véhicule en fonction d'un programme exécuté par l'unité de commande, l'unité de commande étant en outre reliée à un dispositif de géolocalisation et de navigation et à des moyens d'acquisition d'au moins un paramètre physiologique de l'utilisateur, un effort fourni par l'utilisateur, un état de charge de la batterie, et une donnée externe à l'utilisateur et au véhicule,
le programme étant agencé pour commander le dispositif de navigation et gérer un effort fourni par le moteur en fonction : de valeurs cibles du paramètre physiologique et de l'effort fourni par l'utilisateur, d'une localisation du véhicule par rapport à un point d'arrivée prédéterminé et des informations issues des moyens d'acquisition.

D'autres caractéristiques et avantages de l'invention ressortiront à la lecture de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 est une vue schématique d'un système permettant la mise en oeuvre du procédé de l'invention,
- la figure 2 est une vue schématique de l'équipement électronique embarqué sur le véhicule de l'invention,
- la figure 3 illustre par des courbes la gestion de l'effort de l'utilisateur par rapport à la durée de l'exercice.

### DESCRIPTION DETAILLEE DE L'INTENTION

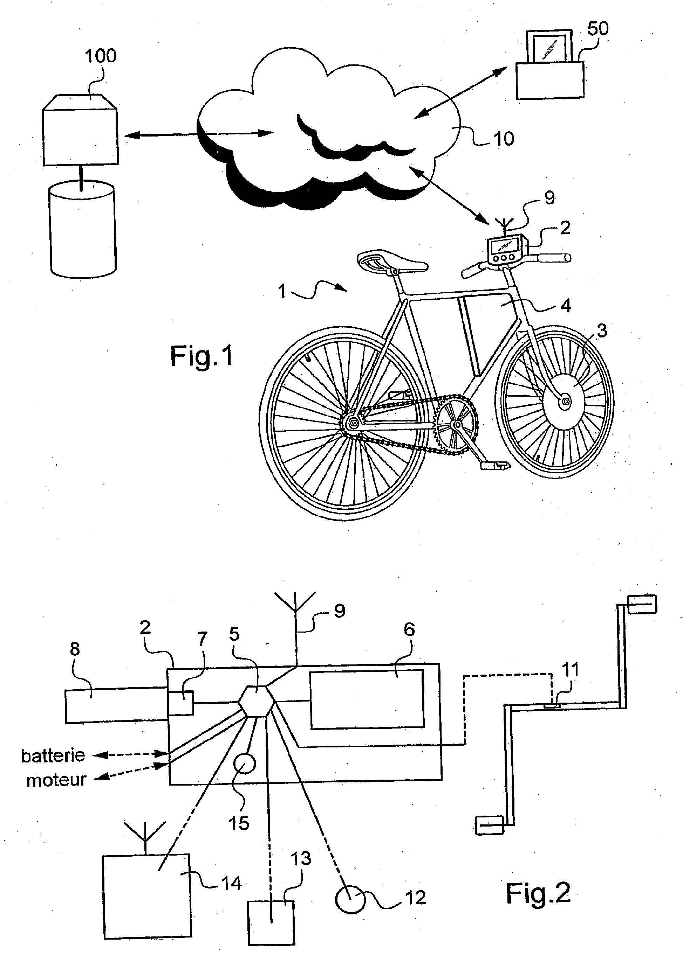

L'invention concerne un procédé de gestion d'un effort physique d'un utilisateur d'un véhicule à propulsion humaine. Le véhicule à propulsion humaine représenté sur la figure 1 est une bicyclette généralement désignée. en 1 mais il va sans dire que le procédé de l'invention est applicable à tout type de véhicule terrestre comme une trottinette ou une voiture à pédales, aquatique comme une embarcation à avirons ou même aérien comme un aéronef à pédales.

La structure mécanique de la bicyclette 1 formant le véhicule conforme à l'invention est connue en elle-même et n'est donc pas détaillée ici.

Toutefois, en plus d'une bicyclette classique, la bicyclette 1 comprend une unité de commande 2 reliée à un moteur électrique 3 alimenté par une batterie 4 et agencé pour se substituer au moins en partie à l'utilisateur pour la propulsion et le freinage du véhicule en fonction d'un programme exécuté par l'unité de commande 2.

L'unité de commande 2 comprend de façon connue en elle-même un processeur 5 permettant l'exécution d'un ou plusieurs programmes informatiques enregistrés dans une mémoire 6 de l'unité de commande 2. L'unité de commande 2 comprend en outre un connecteur 7 de raccordement à une mémoire externe 8 de type clé USB ("Universal Serial Bus" ou Bus Série Universel) et une antenne 9 de connexion à un réseau de télécommunication mobile 10 par exemple de type GSM/GPRS (système global pour les communications mobiles et service radio de transfert de données). Le connecteur 7 peut être remplacé ou secondé par un connecteur répondant à un autre standard comme un port série ou "FIREWIRE". De la même manière, les moyens de connexion au réseau GSM/GPRS peuvent être remplacés ou secondés par des moyens de connexion à un autre type de réseau ou des moyens de connexion utilisant un autre protocole comme par exemple le protocole de transfert de données dit UMTS.

Le moteur électrique 3 est ici fixé sur la roue avant de la bicyclette et la batterie 4 est fixée sur le cadre de celle-ci. La batterie 4 intègre ici un circuit de gestion de son état de charge qui est relié à l'unité de commande 2 pour lui communiquer son niveau de charge. Ce type de circuit de gestion de l'état de charge de la batterie est connu en lui-même et est en général directement intégré dans les batteries intelligentes ou "smart battery". La bicyclette 1 comprend un capteur 11 relié à l'unité de commande 2 et monté sur l'axe du pédalier. Le capteur peut également être agencé pour détecter la tension de la chaîne ou être monté sur le moyeu de la roue arrière de la bicyclette 1 afin de détecter l'effort exercé par l'utilisateur sur le pédalier.

La bicyclette 1 est également pourvue d'un capteur 12 d'un paramètre physiologique de l'utilisateur. Le capteur 12 est ici un capteur de fréquence cardiaque destiné à être fixé sur le corps de l'utilisateur. Au capteur 12 peuvent être entre autres substitués ou ajoutés un capteur de tension artérielle et/ou un capteur de débit cardiaque et/ou un capteur de température corporelle. On notera que le capteur de fréquence cardiaque peut comprendre des électrodes fixées sur le guidon de la bicyclette 1 à l'endroit où l'utilisateur est sensé poser ses mains de sorte que ledit capteur n'a pas besoin d'être fixé sur le corps de l'utilisateur.

La bicyclette 1 comprend en outre un capteur 13 de température ambiante. Au capteur 13, peuvent être notamment substitués ou ajoutés un capteur d'altitude et/ou du taux d'oxyde de carbone dans l'air et/ou un capteur d'oxyde d'azote dans l'air...

Les capteurs 12 et 13 sont reliés à l'unité de commande 2.

Un dispositif de géolocalisation et de navigation 14 est en outre monté sur la bicyclette 1 et relié à l'unité de commande 2. Le dispositif de géolocalisation et de navigation 14 est ici du type GPS ("Global Positioning System" ou Système de positionnement global, par réception et traitement de signaux satellites). Ce dispositif peut également prendre la forme d'un processeur dédié intégré dans l'unité de commande 2 et relié à une antenne d'émission-réception des signaux GPS.

Le programme de commande exécuté par l'unité de commande 2 est agencé pour commander le moteur en fonction des informations suivantes, à savoir :
- la localisation géographique du véhicule,
- le paramètre physiologique de l'utilisateur, ici la fréquence cardiaque,
- l'état de charge de la batterie,
- l'effort fourni par le moteur et l'effort fourni par l'utilisateur,
- au moins une donnée externe au véhicule et à l'utilisateur, à savoir ici la température ambiante.

De préférence ici, le programme de commande de l'unité de commande 2 est agencé pour recevoir d'autres données externes communiquées par un ou plusieurs serveurs dédiées via le réseau de télécommunication mobile 10 et par exemple des données météorologiques, la présence d'un argent allergène dans l'air et sa répartition géographique, l'état du trafic routier... Certaines des données externes comme l'altitude et les difficultés de circulation peuvent en outre être fournies par le dispositif de géolocalisation et de navigation 14.

L'unité de commande 2 est également pourvue d'un bouton d'urgence 15 et le programme de l'unité de commande 2 est agencé pour émettre un signal d'alerte sur le réseau de télécommunication mobile 10 lorsque l'utilisateur a actionné le bouton d'urgence 15. Le programme de commande de l'unité de commande 2 est également agencé pour émettre un tel signal d'alerte lorsque le paramètre physiologique dépasse un seuil d'alerte prédéterminé. Le signal d'alerte est émis à destination d'un poste de secours central et comprend de préférence la localisation de la bicyclette 1 au moment de l'émission du signal d'alerte. La localisation de la bicyclette peut en outre être utilisée pour envoyer le signal d'alerte à un poste de secours se trouvant dans le voisinage de la bicyclette 1.

Dans sa version la plus élaborée, le procédé de l'invention débute par une phase de paramétrage dans laquelle l'utilisateur se connecte à un serveur 100 via Internet et enregistre auprès de ce serveur les données qui le concernent, à savoir :
- des données d'identification personnelles et éventuellement un code personnel d'identification,
- son sexe,
- son âge,
- ses mensurations dont sa taille et son poids, son type morphologique,
- s'il a une activité sédentaire ou non,
- s'il a une activité physique régulière et, le cas échéant, s'il est licencié d'un club sportif ou pratiquant régulier d'un sport,
- ses antécédents médicaux,
- l'existence de pathologies particulières dans sa famille...

L'enregistrement des données est ici effectué au moyen d'un questionnaire rempli en ligne par l'utilisateur. En variante, le serveur peut transmettre à l'utilisateur un questionnaire qu'il doit faire remplir par un médecin. L'utilisateur doit ensuite saisir les réponses au questionnaire sur le serveur 100 ou numériser le questionnaire rempli par le médecin avant, de le transmettre au serveur 100. En variante également, il est possible de prévoir qu'un certain nombre de ces informations puisse être obtenu à partir d'un dispositif particulier que l'utilisateur doit acquérir avant de se connecter au serveur. Un tel dispositif peut par exemple être une balance calculant le poids, l'indice de masse corporelle, l'indice de masse graisseuse et établissant un historique de ces mesures sur une période donnée. Le dispositif peut avantageusement être directement connecté à l'ordinateur de l'utilisateur pour transmettre à celui-ci les mesures réalisées.

Le programme exécuté par le serveur 100 demande alors à l'utilisateur quel est l'objectif qu'il poursuit
- souhaite-t-il se maintenir en forme,
- perdre du poids,
- faire du cardio-training...

De préférence, l'utilisateur indique aussi la fréquence à laquelle il est prêt à utiliser la bicyclette 1 et sur quelle longueur de trajet.

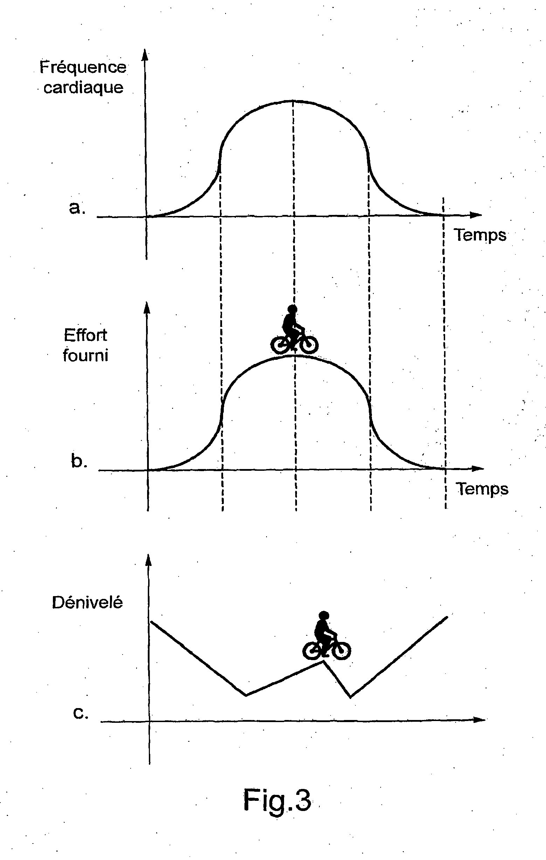

Un médecin, ou le programme du serveur 100 utilisant une base de données établie par un médecin, établit alors un programme d'exercices pour l'utilisateur. A partir des données fournies, il est possible de déterminer une durée et/ou une distance et/ou une intensité souhaitable d'exercice, un nombre de calories à dépenser et un seuil de fréquence cardiaque à ne pas dépasser. Le serveur va alors plus précisément établir:
- un effort à fournir par l'utilisateur sur la distance à parcourir ou la durée de l'exercice pour parvenir à ce but, et
- une répartition de valeurs optimales (appelées par la suite valeurs cibles) du paramètre physiologique et de l'effort à fournir sur la distance ou la durée de l'exercice. On comprend que la durée de l'exercice est ici la durée souhaitée par l'utilisateur, une durée imposée par le médecin ou le programme du serveur 100 et correspond à la durée d'un trajet réalisée avec la bicyclette 1. On comprend également que la distance de l'exercice peut être une distance choisie par l'utilisateur, le médecin ou le programme du serveur. Par exemple, si l'utilisateur décide d'utiliser la bicyclette 1 au moins deux fois par semaine pour se rendre à son travail, la durée du trajet domicile - travail sera la distance de l'exercice. En variante, l'utilisateur peut choisir: d'utiliser la bicyclette 1 dans le cadre de ses loisirs, deux fois par semaines, et il choisit le temps qu'il veut consacrer à l'exercice. Le seuil du paramètre physiologique, les valeurs cibles du paramètre physiologique et de l'effort à fournir par l'utilisateur sous forme d'une répartition des valeurs cibles sur la distance ou la durée de l'exercice, (voir la figure 3, a et b) sont téléchargés par l'utilisateur sur la mémoire externe 8 que l'utilisateur aura préalablement connectée à son ordinateur 50. On comprend que le programme prévoit trois entrées qui conditionnent la détermination des valeurs cibles, à savoir :
- la durée et/ou la distance de l'exercice,
- l'effort.

L'utilisateur connecte alors la mémoire externe 8 au moyen de connexion 7 de l'unité de commande 2 de manière que le programme de l'unité de commande 2 puisse le récupérer seuil du paramètre physiologique, l'effort à fournir par l'utilisateur, et la répartition des valeurs cibles de ceux-ci sur la durée de l'exercice.

L'utilisateur va préalablement à l'utilisation de la bicyclette 1, indiquer au dispositif de géolocalisation et de navigation 14 son point de départ et son point d'arrivée. On notera que le point d'arrivée et le point de départ peuvent être identiques, l'utilisateur souhaittant faire une boucle doit alors indiquer une longueur de trajet souhaitée. Le dispositif de géolocalisation et de navigation 14 va alors calculer un itinéraire. L'unité de commande 2 va alors appliquer à la durée de cet itinéraire la répartition des valeurs cibles du paramètre physiologique et de l'effort à fournir par l'utilisateur.

Lorsque l'utilisateur a commencé à pédaler sur l'itinéraire prévu, le programme de commande 2 détermine périodiquement l'effort fourni par le moteur électrique 3 qui vient soit soulager l'utilisateur, soit s'opposer à l'effort exercé par l'utilisateur, de manière à respecter la répartition des valeurs cibles de l'effort à fournir par l'utilisateur et du paramètre physiologique. Le dénivelé ne joue donc pas sur l'effort fourni par l'utilisateur (figure 3, b et c). On notera que lorsque le moteur électrique 3 s'oppose à l'avancement de la bicyclette 1 il est dans une configuration d'alternateur lui permettant de recharger la batterie 4. Dans tous les cas, le paramètre physiologique ne doit jamais dépasser le seuil prédéterminé qui constitue le seuil d'émission du signal d'alerte.

Pour la détermination de l'effort à fournir par le moteur, l'unité de commande 2 tient compte des valeurs cibles mais également des informations suivantes :
la localisation géographique du véhicule,
- l'état de charge de la batterie et
- la ou les données externes.

Le programme de commande de l'unité de commande 2 est agencé pour demander au dispositif de géolocalisation et de navigation 14 de modifier l'itinéraire pour tenir compte :
de l'état de charge de la batterie 4,
- de la température extérieure ou de la présence d'une zone allergène, de la dégradation des conditions météorologiques ou d'un ralentissement de circulation sur une partie de l'itinéraire d'après les données externes recueillies depuis la bicyclette 1 ou reçues du réseau de télécommunication,
- de la fatigue de l'utilisateur détectée par exemple à partir de la fréquence cardiaque de l'utilisateur, de sa température corporelle et/ou de sa tension artérielle...

Lorsque la charge de la batterie s'avère trop faible pour respecter la répartition des valeurs cibles, il peut être prévu de modifier l'itinéraire pour s'assurer que la charge de la batterie sera suffisante jusqu'au point d'arrivée prédéterminé. En variante, l'unité de commande 2 peut informer l'utilisateur que le moteur électrique 3 ne sera utilisé que pour l'assister dans les montées et ne sera pas utilisé dans un but résistant, ou l'unité de commande 2 pourra informer l'utilisateur que s'il souhaite poursuivre son itinéraire jusqu'au point d'arrivée, la fin de l'itinéraire risque de se faire sans assistance par le moteur électrique 3.

Il peut être prévu également sur l'unité de commande 2 un bouton de retour rapide permettant à l'utilisateur de signifier à l'unité de commande qu'il désire abréger l'exercice par exemple parce qu'il ne se sent pas bien ou qu'il commence à pleuvoir. L'unité de commande 2 commande alors le dispositif de géolocalisation et de navigation 14 pour que l'itinéraire soit modifié de manière à revenir directement au point de départ ou à aller soit au point de départ soit au point d'arrivée selon la proximité de ceux-ci. Avantageusement, l'appui sur le bouton de retour rapide peut entraîner également une commande du moteur électrique,2 de manière que celui-ci assiste l'utilisateur de façon optimisée en tenant compte de la charge de la batterie et de la distance restant à parcourir. L'unité de commande 2 peut également comprendre un bouton de fin d'exercice par lequel l'utilisateur peut signifier à l'unité de commande qu'il ne souhaite plus que le moteur s'oppose à son effort.

Il est également, possible, lorsque l'utilisateur en a signifié le souhait lors du paramétrage, de transmettre périodiquement la localisation du véhicule au serveur via le réseau de télécommunication de telle manière que le serveur puisse :
- identifier un certain nombre d'utilisateurs de la bicyclette conforme à l'invention dans une même zone géographique, et
- envoyer à l'unité de commande 2 une instruction de modification de l'itinéraire de manière à faire converger ces utilisateurs vers une même portion d'itinéraire.

Dans le même ordre d'idée, il est possible avec une liaison permanente des unités de commande au serveur de faire suivre un même parcours à une même allure à des utilisateurs de niveaux et de formes différents. Les moteurs sont alors commandés de façon synchronisée via le serveur et leur programme de commande pour que les utilisateurs avancent à la même vitesse en fournissant des efforts différents. La vitesse retenue dépend par exemple du niveau de charge de la batterie de l'utilisateur ayant le plus besoin d'assistance, les autres utilisateurs étant calés sur cette vitesse au besoin en utilisant le moteur électrique de leur bicyclette comme frein.

L'unité de commande 2 est agencée pour mémoriser les données d'itinéraires, comme la longueur ou le dénivelé, la variation du paramètre physiologique et de l'effort fourni par l'utilisateur. L'ensemble des paramètres mémorisés est alors utilisé notamment pour établir des valeurs cibles pour une utilisation ultérieure de la bicyclette 1. Les paramètres mémorisés peuvent en outre être transférés via la mémoire externe 8 sur l'ordinateur de l'utilisateur puis vers le serveur dans lequel les paramètres mémorisés vont être traités par un programme agencé pour réaliser l'une au moins des opérations suivantes :
- déterminer des valeurs cibles pour une utilisation ultérieure du véhicule,
- élaborer un régime alimentaire adapté à une dépense énergétique calculée à partir des paramètres mémorisés,
- archiver les paramètres mémorisés successivement transmis par l'utilisateur et établir un historique d'évolution d'au moins un desdits paramètres.

Ledit historique ou les paramètres archivés peuvent être transmis à l'utilisateur ou affichés sur son ordinateur à sa demande.

En variante, il est possible de prévoir que l'unité de commande puisse établir une liaison téléphonique entre l'utilisateur et un médecin lorsque le paramètre physiologique dépasse un seuil prédéterminé malgré l'assistance fournie par le moteur ou lorsque la bicyclette s'arrête définitivement avant d'avoir atteint son point d'arrivée. A cet effet, on peut prévoir soit un dispositif à microphone et haut-parleur mains libres montés sur l'unité de commande pour permettre à l'utilisateur de communiquer avec le médecin, on alors l'unité de commande peut comprendre un organe de connexion du téléphone mobile ou être agencée comme une base d'accueil du téléphone mobile de l'utilisateur (la connexion de l'unité de commande au réseau de télécommunications GSM est alors assurée par le téléphone de l'utilisateur).

L'unité de commande 2 peut comprendre un écran d'affichage de messages, par exemple de type SMS (pour « Short Message Service ») alertant l'utilisateur d'une modification d'itinéraire ou d'une modification de l'asservissement du moteur décidée par le médecin par exemple au vu d'une évolution du paramètre physiologique qui lui aurait été transmise par l'unité de commande 2 via le réseau de télécommunication mobile.

L'écran utilisé pour restituer des informations à l'utilisateur peut également être celui du dispositif de géo localisation et de navigation 14 ou celui d'un assistant électronique personnel relié à l'unité de commande 2 par câble ou sans fil.

De préférence, une liaison permanente, via le réseau GSM par exemple, est établie entre l'unité de commande 2 et le serveur. Cette liaison permanente permet à l'unité de commande 2 d'envoyer en temps réel au serveur les valeurs de tous les paramètres surveillés et lés valeurs des consignes de commande du moteur. L'unité de commande exécute de préférence un programme chargé de surveiller l'état de cette liaison en permanence de telle manière que les données puissent être transmises et reçues dés que la liaison avec le serveur est active.

Avantageusement, en particulier lorsque la bicyclette est utilisée en rééducation, le serveur est programmé pour comparer lesdites informations à des seuils et alerte, par exemple via SMS ou appel vocal préenregistré, l'équipe médicale en cas de dépassement d'un de ces seuils. L'équipe médicale peut en outre modifier le programme de commande sur le serveur et envoyer une mise à jour à l'unité de commande 2 pour modifier en temps réel les valeurs cibles de l'exercice en cours.

Dans cette application, l'équipe médicale va paramétrer le programme de commande à partir d'une ou plusieurs valeurs ou plages de dépense énergétique et d'une ou plusieurs valeurs ou plages de durée d'exercice, en association avec des valeurs du rythme cardiaque de l'utilisateur au repos, au travail et maximal à ne pas dépasser.

Avantageusement, il est possible de prévoir des moyens pour qu'en descente, l'utilisateur puisse freiner la bicyclette tout en pédalant dans le sens d'avancement mais en forçant non plus sur sa jambe avant, comme dans le pédalage classique, mais sur sa jambe arrière de manière à produire un effort excentrique. Dans cette version, le moteur électrique 3 est ici monté en prise, directe ou indirecte, avec la roue arrière. Le moteur est ainsi monté sur le moyeu de la roue arrière ou sur le pédalier, en série ou en parallèle avec celui-ci. Les moyens peuvent comprendre une roue libre commandable pour transmettre le mouvement soit dans un seul sens de rotation soit dans les deux sens de rotation. Le programme de commande peut ainsi être agencé pour gérer la fourniture par l'utilisateur d'efforts concentriques ou excentriques.

Bien entendu, l'invention n'est pas limitée au mode de réalisation décrit et on peut y apporter des variantes de réalisation sans sortir du cadre de l'invention tel que défini par les revendications.

En particulier, on peut prévoir que l'utilisateur puisse préciser qu'il veut réaliser l'exercice sans être essoufflé ou sans suer (par exemple sur son trajet domicile - lieu de travail). Dans ce cas, l'unité de commande 2 gère l'effort du moteur électrique 3 en fonction du ou des paramètres physiologiques pour limiter l'essoufflement où la sudation.

L'unité de commande 2 peut être équipée de tout type de moyens de connexion sans fil, comme une liaison infrarouge ou radio de type BLUETOOTH ou WIFI, ou filaire comme une liaison de type USB ou réseau.

Le procédé et le véhicule de l'invention peuvent être utilisés dans un cadre privé ou médicalisé, par exemple dans ce dernier cas pour la rééducation de patient ayant subi un accident cardiovasculaire.

L'itinéraire peut être changé dans le dispositif de géolocalisation et de navigation 14.

Il peut être prévu de pouvoir modifier les paramètres de l'exercice directement sur l'unité de commande par l'utilisateur ou via une liaison sans fil par un médecin à qui les paramètres physiologiques de l'utilisateur auront été transmis par exemple en temps réel par l'unité de commande.

L'accès au serveur peut être réalisé en direct ou via tout type de réseau : local, LAN, WAN, intranet ou extranet.

En outre, au moins un détecteur est agencé pour détecter au moins l'une des données externes suivantes : oxyde de carbone contenu dans l'air ambiant, oxyde d'azote contenu dans l'air ambiant, particules contenues dans l'air, agent allergène, température ambiante.

En variante, le calculateur intégré dans l'unité de commande peut être extérieur à l'unité de commande et par exemple celui d'un dispositif électronique relié par une liaison sans fil ou filaire à l'unité de commande. Ce dispositif électronique peut être un dispositif de navigation et géo localisation, un assistant personnel, un téléphone...

La prise en compte d'une donnée externe est facultative.

## Revendications

1. Procédé de gestion d'un effort physique d'un utilisateur d'un véhicule (1) à propulsion humaine comportant une unité de commande (2) reliée à un moteur électrique (3) alimenté par une batterie (4) et agencé pour se substituer au moins en partie à l'utilisateur pour la propulsion et le freinage du véhicule en fonction d'un programme exécuté par l'unité de commande pour gérer l'effort physique de l'utilisateur, l'unité de commande étant reliée à un dispositif de géolocalisation et de navigation (14), le procédé comprenant les étapes de :
- déterminer, d'une part, des valeurs cibles concernant au moins un paramètre physiologique et l'effort fourni par l'utilisateur et, d'autre part, un itinéraire vers un point d'arrivée prédéterminé,
- acquérir des informations utilisées par le programme de commande, à savoir au moins une localisation géographique du véhicule, le paramètre physiologique de l'utilisateur, un état de charge de la batterie, un effort fourni par le moteur, l'effort fourni par l'utilisateur,
- commander le moteur en fonction des informations et des valeurs cibles, cette commande étant telle que sur au moins une partie de l'itinéraire le moteur s'oppose à l'effort fourni par l'utilisateur pour atteindre les valeurs cibles du paramètre physiologique et de l'effort fourni par l'utilisateur.

2. Procédé selon la revendication 1, comprenant l'étape d'établir une liaison avec un réseau de télécommunication sans fil (10).

3. Procédé selon la revendication 2, comprenant l'étape d'émettre un signal d'alerte sur le réseau de télécommunication (100) lorsque le paramètre physiologique atteint un seuil prédéterminé ou lorsque l'utilisateur a actionné un bouton d'urgence (15) de l'unité de commande (2).

4. Procédé selon la revendication 2, dans lequel la donnée externe est téléchargée depuis le réseau de communication (10).

5. Procédé selon la revendication 2, dans lequel la localisation du véhicule (1) est périodiquenent transmise à un serveur (100) via le réseau de télécommunication (10) et est utilisée pour au moins l'une des opérations suivantes :
- faire converger vers une même portion d'itinéraire des utilisateurs se trouvant dans une même zone géographique,
- alerter un poste de secours si le serveur a en outre reçu via le réseau de télécommunication un signal d'alerte en provenance du véhicule.

6. Procédé selon la revendication 1, comprenant l'étape préalable de charger dans le dispositif de géolocalisation et de navigation (14) un itinéraire préprogramme et dans l'unité de commande (2) une répartition de l'effort fourni par le moteur présentant les valeurs cibles le long de cet itinéraire.

7. Procédé selon la revendication 6, dans lequel la répartition de l'effort est élaborée à des fins d'entretien corporel, de rééducation ou d'entretien cardiaque, ou bien encore d'amaigrissement...

8. Procédé selon la revendication 6, comprenant l'étape de mémoriser dans l'unité de commande (2) des paramètres comportant au moins des données d'itinéraire, le paramètre physiologique et une donnée représentative d'un effort fourni par l'utilisateur, lés valeurs cibles étant déterminée en fonction des paramètres mémorisés lors d'une précédente utilisation.

9. Procédé selon la revendication 6, comprenant l'étape de transférer les paramètres mémorisés vers un serveur (100) dans lequel les paramètres mémorisés sont traités par un programme agencé pour réaliser l'une au moins des opérations suivantes :
- déterminer des valeurs cibles pour une utilisation ultérieure du véhicule (1),
- élaborer un régime alimentaire adapté à une dépense énergétique calculée à partir des paramètres mémorisés,
- archiver les paramètres mémorisés successivement transmis par l'utilisateur et établir un historique d'évolution d'au moins un desdits paramètres.

10. procédé selon la revendication 6, dans lequel la répartition des valeurs cibles est téléchargée depuis un serveur (100) et enregistrée dans l'unité de commande lors d'une étape de paramétrage précédant une utilisation du véhicule (1).

11. Procédé selon la revendication 1, dans lequel l'acquisition dudit paramètre physiologique de l'utilisateur comprend une ou plusieurs des mesures suivantes : la fréquence cardiaque, la tension artérielle, le débit cardiaque, la température corporelle de l'utilisateur.

12. Procédé selon la revendication 1, dans lequel les informations utilisées par le programme comprennent au moins une donnée externe au véhicule et à l'utilisateur.

13. Procédé selon la revendication 12, dans lequel la donnée externe comprend une ou plusieurs des données suivantes : la température ambiante, le taux d'oxyde de carbone dans l'air, le taux d'oxyde d'azote dans l'air, des données météorologiques, la présence d'un agent allergène dans l'air, l'état du trafic routier.

14. Procédé selon la revendication 13, dans lequel la donnée externe est détectée depuis le véhicule (1).

15. Procédé selon la revendication 13, dans lequel la donnée externe est téléchargée dans l'unité de commande (2).

16. Véhicule (1) à propulsion humaine comportant une unité de commande (2) reliée à un moteur électrique (3) alimenté par une batterie (4) et agencé pour se substituer au moins en partie à un utilisateur pour la propulsion et le freinage du véhicule en fonction d'un programme exécuté par l'unité de commande, l'unité de commande étant en outre reliée à un dispositif de géolocalisation (14) et de navigation (11, 12, 13) et à des moyens d'acquisition d'au moins un paramètre physiologique de l'utilisateur, d'un effort fourni par l'utilisateur, un état de charge de la batterie et une données externe à l'utilisateur et au véhicule, le véhicule étant **caractérisé en ce que** le programme est agencé pour commander le dispositif de navigation et gérer un effort fourni par le moteur en fonction : de valeurs cibles du paramètre physiologique et de l'effort fourni par l'utilisateur, d'une localisation du véhicule par rapport à un point d'arrivée prédéterminé et des informations issues des moyens d'acquisition, ce programme étant également agencé pour que sur au moins une partie de l'itinéraire le moteur s'oppose à l'effort fourni par l'utilisateur pour at teindre les valeurs cibles du paramètre physiologique et de l'effort fourni par l'utilisateur.

17. Véhicule selon la revendication 16, comparenant des moyens de connexion à un réseau de télécommunication mobile (10).

18. Véhicule selon la revendication 17, dans lequel l'unité de commande (2) comprend un bouton d'urgence (15) et le programme de commande est agencé pour émettre un signal d'alerte sur le réseau de télécommunication (10) lorsque l'utilisateur actionne le bouton d'urgence.

19. Véhicule selon la revendication 17, dans lequel le programme de commande (2) est agencé pour émettre un signal d'alerte sur le réseau de télécommunication (10) lorsque le paramètre physiologique dépasse un seuil d'alerte.

20. Véhicule selon la revendication 17, dans lequel l'unité de commande (2) est agencée pour recevoir la donnée externe du réseau de télécommunication mobile (10).

21. Véhicule selon la revendication 16, dans lequel les moyens d'acquisition d'au moins un paramètre physiologique de l'utilisateur comprennent au moins un détecteur (12) agencé pour détecter au moins l'un des paramètres physiologiques suivantes : la fréquence cardiaque, la tension· artérielle, le débit cardiaque, la température corporelle de l'utilisateur.

22. Véhicule selon la revendication 16, comprenant au moins un détecteur (13) agencé pour détecter au moins l'une des données externes suivantes : oxyde de carbone contenu dans l'air ambiant, oxyde d'azote contenu dans l'air ambiant, particules contenues dans l'air, agent allergène, température ambiante.

23. Véhicule selon la revendication 16, dans lequel l'unité de commande (2) est pourvue de moyens de connexion (7) d'au moins un module mémoire externe (8).

24. Véhicule selon la revendication 16, dans lequel l'unité de commande (2) est pourvue de moyens de connexion à un téléphone mobile de l'utilisateur.

## Patentansprüche

1. Verfahren zum Steuern einer physischen Kraft eines Benutzers eines Fahrzeugs (1) mit menschlichem Antrieb, umfassend eine Steuereinheit (2), die mit einem Elektromotor (3) verbunden ist, der von einer Batterie (4) gespeist wird und so ausgebildet ist, dass er den Benutzer zumindest teilweise für den Antrieb und die Bremsung des Fahrzeugs in Abhängigkeit eines Programms ersetzt, das von der Steuereinheit ausgeführt wird, um die physische Kraft des Benutzers zu steuern, wobei die Steuereinheit mit einer Vorrichtung (14) zur geographischen Lokalisierung und zur Navigation verbunden ist, wobei das Verfahren die Schritte umfasst:
- Bestimmen einerseits von Zielwerten, die mindestens einen physiologischen Parameter und die vom Benutzer gelieferte Kraft betreffen, und andererseits einer Route zu einem vorgegebenen Zielpunkt,
- Erfassen von Informationen, die von dem Steuerprogramm verwendet werden, nämlich mindestens eine geographische Lokalisierung des Fahrzeugs, den physiologischen Parameter des Benutzers, einen Ladezustand der Batterie, eine vom Motor gelieferte Kraft, die vom Benutzer gelieferte Kraft,
- Steuern des Motors in Abhängigkeit der Informationen und der Zielwerte, wobei diese Steuerung derart ist, dass sich der Motor auf mindestens einem Teil der Route der vom Benutzer gelieferten Kraft widersetzt, um die Zielwerte des physiologischen Parameters und die vom Benutzer gelieferte Kraft zu erreichen.

2. Verfahren nach Anspruch 1, umfassend den Schritt des Herstellens einer Verbindung mit einem drahtlosen Telekommunikationsnetz (10).

3. Verfahren nach Anspruch 2, umfassend den Schritt des Sendens eines Alarmsignals über das Telekommunikationsnetz (100), wenn der physiologische Parameter einen vorgegebenen Schwellwert erreicht oder wenn der Benutzer einen Notknopf (15) der Steuereinheit (2) betätigt hat.

4. Verfahren nach Anspruch 2, wobei das externe Datenelement von dem Kommunikationsnetz (10) heruntergeladen wird.

5. Verfahren nach Anspruch 2, wobei die Lokalisierung des Fahrzeugs (1) regelmäßig über das Telekommunikationsnetz (10) an einen Server (100) übertragen und für mindestens einen der folgenden Vorgänge genutzt wird:
- Zusammenführen von Benutzern, die sich in einer gleichen geographischen Zone befinden, zu einem gleichen Routenabschnitt,
- Alarmieren einer Hilfsstation, wenn der Server ferner über das Telekommunikationsnetz ein von dem Fahrzeug kommendes Alarmsignal empfangen hat.

6. Verfahren nach Anspruch 1, umfassend den vorhergehenden Schritt des Ladens einer vorprogrammierten Route in die Vorrichtung (14) zur geographischen Lokalisierung und Navigation und einer Verteilung der vom Motor gelieferten Kraft, die die Zielwerte entlang dieser Route darstellen, in die Steuereinheit (2).

7. Verfahren nach Anspruch 6, wobei die Verteilung der Kraft zu Zwecken körperlicher Fitness, Rehabilitation oder Herzfitness oder auch eines Gewichtsverlusts erarbeitet wird.

8. Verfahren nach Anspruch 6, umfassend den Schritt des Speicherns in der Steuereinheit (2) von Parametern, die mindestens Routendaten, den physiologischen Parameter und ein Datenelement, das repräsentativ für eine vom Benutzer gelieferte Kraft ist, umfassen, wobei die Zielwerte in Abhängigkeit von während einer vorangegangenen Nutzung gespeicherten Parametern bestimmt werden.

9. Verfahren nach Anspruch 6, umfassend den Schritt des Übertragens der gespeicherten Parameter zu einem Server (100), in dem die gespeicherten Parameter von einem Programm verarbeitet werden, das derart ausgebildet ist, dass es mindestens einen der folgenden Vorgänge durchführt:
- Bestimmen von Zielwerten für eine spätere Nutzung des Fahrzeugs (1),
- Erarbeiten einer Diät, die an einen Energieverbrauch angepasst ist, der anhand der gespeicherten Parameter berechnet wird,
- Archivieren der gespeicherten Parameter, die nacheinander von dem Benutzer übertragen werden, und Erstellen einer Entwicklungshistorie mindestens eines der genannten Parameter.

10. Verfahren nach Anspruch 6, wobei die Verteilung der Zielwerte von einem Server (100) heruntergeladen und während eines Parametrisierungsschrittes, der einer Nutzung des Fahrzeugs (1) vorausgeht, in der Steuereinheit (2) gespeichert wird.

11. Verfahren nach Anspruch 1, wobei die Erfassung des genannten physiologischen Parameters des Benutzers eine oder mehr der folgenden Messungen umfasst: der Herzfrequenz, des Blutdrucks, des Herzschlagvolumens, der Körpertemperatur des Benutzers.

12. Verfahren nach Anspruch 1, wobei die von dem Programm genutzten Informationen mindestens ein in Bezug auf das Fahrzeug und den Benutzer externes Datenelement umfassen.

13. Verfahren nach Anspruch 12, wobei das externe Datenelement ein oder mehr der folgenden Daten umfasst: die Umgebungstemperatur, der Kohlenstoffoxidgehalt in der Luft, der Stickoxidgehalt in der Luft, meteorologische Daten, das Vorhandensein eines Allergens in der Luft, die Straßenverkehrslage.

14. Verfahren nach Anspruch 13, wobei das externe Datenelement von dem Fahrzeug (1) aus erfasst wird.

15. Verfahren nach Anspruch 13, wobei das externe Datenelement in die Steuereinheit (2) heruntergeladen wird.

16. Fahrzeug (1) mit menschlichem Antrieb, umfassend eine Steuereinheit (2), die mit einem Elektromotor (3) verbunden ist, der von einer Batterie (4) gespeist wird und derart ausgebildet ist, dass er einen Benutzer zumindest teilweise für den Antrieb und die Bremsung des Fahrzeugs in Abhängigkeit eines von der Steuereinheit ausgeführten Programms ersetzt, wobei die Steuereinheit ferner mit einer Vorrichtung zur geographischen Lokalisierung (14) und Navigation (11, 12, 13) sowie mit Mitteln zum Erfassen mindestens eines physiologischen Parameters des Benutzers, einer vom Benutzer gelieferten Kraft, eines Ladezustandes der Batterie und eines in Bezug auf den Nutzer und das Fahrzeug externen Datenelements verbunden ist, wobei das Fahrzeug **dadurch gekennzeichnet ist, dass** das Programm derart ausgebildet ist, dass es die Navigationsvorrichtung steuert sowie eine vom Motor gelieferte Kraft steuert in Abhängigkeit von: Zielwerten des physiologischen Parameters und der vom Benutzer gelieferten Kraft, einer Lokalisierung des Fahrzeugs relativ zu einem vorgegebenen Zielpunkt und Informationen, die von Erfassungsmitteln stammen, wobei dieses Programm ferner so ausgebildet ist, dass sich der Motor auf mindestens einem Teil der Route der vom Benutzer gelieferten Kraft widersetzt, um die Zielwerte des physiologischen Parameters und der vom Benutzer gelieferten Kraft zu erreichen.

17. Fahrzeug nach Anspruch 16, umfassend Verbindungmittel zur Verbindung mit einem mobilen Telekommunikationsnetz (10).

18. Fahrzeug nach Anspruch 17, wobei die Steuereinheit (2) einen Notknopf (15) umfasst und das Steuerprogramm derart ausgebildet ist, dass es ein Alarmsignal über das Telekommunikationsnetz (10) sendet, wenn der Nutzer den Notknopf betätigt.

19. Fahrzeug nach Anspruch 17, wobei das Steuerprogramm (2) derart ausgebildet ist, dass es ein Alarmsignal über das Telekommunikationsnetz (10) sendet, wenn der physiologische Parameter einen Alarmschwellwert überschreitet.

20. Fahrzeug nach Anspruch 17, wobei die Steuereinheit (2) derart ausgebildet ist, dass sie das externe Datenelement vom mobilen Telekommunikationsnetz (10) empfängt.

21. Fahrzeug nach Anspruch 16, wobei die Mittel zur Erfassung mindestens eines physiologischen Parameters des Benutzers mindestens einen Detektor (12) umfassen, der so ausgebildet ist, dass er mindestens einen der folgenden physiologischen Parameter erfasst: die Herzfrequenz, den Blutdruck, das Herzschlagvolumen, die Körpertemperatur des Benutzers.

22. Fahrzeug nach Anspruch 16, umfassend mindestens einen Detektor (13), der so ausgebildet ist, dass er mindestens eines der folgenden externen Datenelemente erfasst: Kohlenstoffoxidgehalt in der Umgebungsluft, Stickoxidgehalt in der Umgebungsluft, in der Luft enthaltene Partikel, Allergene, Umgebungstemperatur.

23. Fahrzeug nach Anspruch 16, wobei die Steuereinheit (2) mit Anschlussmitteln (7) zum Anschluss mindestens eines externen Speichermoduls (8) versehen ist.

24. Fahrzeug nach Anspruch 16, wobei die Steuereinheit (2) mit Mitteln zum Anschluss an ein Mobiltelefon des Benutzers versehen ist.

## Claims

1. A method of managing physical effort expended by a user of a human-propelled vehicle (1) provided with a control unit (2) connected to an electric motor (3) that is powered by a battery (4) and that is arranged to take the place at least in part of the user for the purposes of propelling and of braking the vehicle, as a function of a program executed by the control unit in order to manage the physical effort expended by the user, the control unit being connected to a GNSS device (14), the method comprising the steps of:
- determining firstly target values for at least one physiological parameter and for the effort delivered by the user, and secondly a route towards a predetermined point of arrival;
- acquiring information used by the control program, namely at least one geographical location of the vehicle, the physiological parameter of the user, a state of charge of the battery, an effort delivered by the motor, and the effort delivered by the user; and
- controlling the motor as a function of the information and of the target values in such a way that over at least a portion of the route, the motor opposes the effort delivered by the user in order to achieve the target values for the physiological parameter and for the effort delivered by the user.

2. A method according to claim 1, further comprising a step of setting up a link with a wireless communications network (10).

3. A method according to claim 2, further comprising a step of transmitting an alarm signal over the telecommunications network (100) whenever the physiological parameter reaches a predetermined threshold, or whenever the user has actuated an emergency button (15) of the control unit (2).

4. A method according to claim 2, wherein external data is downloaded from the communications network (10).

5. A method according to claim 2, wherein the location of the vehicle (1) is periodically transmitted to a server (100) via the telecommunications network (10), and is used for at least one of the following operations:
· causing users who are in the same geographical zone to converge towards the same route portion; and
· warning a rescue station if the server has also received an alarm signal coming from the vehicle via the telecommunications network.

6. A method according to claim 1, further comprising a prior step of loading a preprogrammed route into the GNSS device (14), and of loading a distribution of the effort delivered by the motor into the control unit (2), which distribution presents target values along said route.

7. A method according to claim 6, wherein the distribution of the effort is formulated for the purposes of keeping the body fit, of physiotherapy or medical rehabilitation, of keeping the heart fit, or indeed of slimming, etc.

8. A method according to claim 6, further comprising a step of storing in a memory in the control unit (2) parameters including at least route data, the physiological parameter, and data representative of an effort delivered by the user, the target values being determined as a function of the parameters stored in the memory while the vehicle was being used on a preceding occasion.

9. A method according to claim 6, further comprising a step of transferring the stored parameters towards a server (100) in which the stored parameters are processed by a program arranged to perform at least one of the following operations:
· determining target values for subsequent use of the vehicle (1);
· formulating a diet adapted to energy expenditure computed on the basis of the parameters stored in the memory; and
· archiving the stored parameters successively transmitted by the user and establishing a history of variation of at least one of said parameters.

10. A method according to claim 6, wherein the distribution of the target values is downloaded from the server (100) and is recorded in the control unit during a setting step prior to use of the vehicle (1).

11. A method according to claim 1, wherein said acquisition of said physiological parameter of the user comprises one or more of the following measurements: heart rate; blood pressure; cardiac output; and body temperature of the user.

12. A method according to claim 1, wherein the information used by the program includes external data that is external to the vehicle and to the user.

13. A method according to claim 12, wherein the external data comprises one or more of the following kinds of data: ambient temperature; carbon monoxide content in the air; nitrogen oxide content in the air; weather data; presence of an allergen in the air, and state of road traffic.

14. A method according to claim 13, wherein the external data is detected from the vehicle (1).

15. A method according to claim 13, wherein the external data is downloaded into the control unit (2).

16. A human-propelled vehicle (1) provided with a control unit (2) connected to an electric motor (3) that is powered by a battery (4) and that is arranged to take the place at least in part of the user for the purposes of propelling and of braking the vehicle, as a function of a program executed by the control unit, the control unit further being connected to a GNSS device (14) and to acquisition means (11, 12, 13) for acquiring at least one physiological parameter of the user, an effort delivered by the user, a state of charge of the battery, and external data that is external to the user and to the vehicle, the vehicle being **characterized in that** the program is arranged to control the GNSS and to manage the effort delivered by the motor as a function of: target values for the physiological parameter and for the effort delivered by the user; a location of the vehicle relative to a predetermined point of arrival, and information from the acquisition means, said program being arranged in such a way that over at least a portion of a route followed by the vehicle, the motor opposes the effort delivered by the user in order to achieve said target values of the physiological parameter and of the effort delivered by the user.

17. A vehicle according to claim 16, comprising connection means for connecting to a mobile telecommunications network (10).

18. A vehicle according to claim 17, wherein the control unit (2) has an emergency button (15), and the control program is arranged to transmit an alarm signal over the telecommunications network (10) whenever the user actuates the emergency button.

19. A vehicle according to claim 17, wherein the control program (2) is arranged to transmit an alarm signal over the telecommunications network (10) whenever the physiological parameter exceeds an alarm threshold.

20. A vehicle according to claim 17, wherein the control unit (2) is arranged to receive the external data from the mobile telecommunications network (10).

21. A vehicle according to claim 16, wherein the acquisition means for acquiring at least one physiological parameter of the user are provided with at least one detector (12) arranged to detect at least one of the following physiological parameters: heart rate; blood pressure; cardiac output; and body temperature of the user.

22. A vehicle according to claim 16, provided with at least one detector (13) arranged to detect at least one of the following kinds of external data: carbon monoxide content in the ambient air; nitrogen oxide content in the ambient air; particles contained in the air, allergen; and ambient temperature.

23. A vehicle according to claim 16, wherein the control unit (2) is provided with connection means (7) for connecting to at least one external memory module (8).

24. A vehicle according to claim 16, wherein the control unit (2) is provided with connection means for connecting to a mobile telephone of the user.
